# EUROPEAN PATENT APPLICATION

(11) **EP 0 748 846 A2**
(43) Date of publication of application: **18.12.1996**
(21) Application number: 96202568.0
(22) Date of filing: 21.05.1992
(51) Int. Cl.: C08L 67/04

(54) **Polylactide blends**

(30) Priority: 24.05.1991 US 705574
(62) Divisional of application: 92304651.0
(71) Applicant: Camelot Technologies Inc., Leominster, Massachusetts 01453 (US)
(72) Inventor: Kharas, Gregory B., Chelmsford, Mass 01824 (US); Nemphos, Speros P., Clinton, Mass 01510 (US)
(74) Representative: Smaggasgale, Gillian Helen

(57) **Abstract**

Alloys comprising from about 60 to 98 weight % of a polymer lactic acid and from 40 to 2 weight % of one or more polymeric extruders and/or organic elastomers have good flexibility and may be formed into useful articles.

## Description

The present invention relates to biodegradable polymer alloys. More particularly the present invention relates to polymer alloys comprising a polymer of lactic acid and one or more polymers of the general classes alkylene oxides, vinyl ethers, styrene-butadiene polymers which may be functionalized and which may also be hydrogenated EPDM polymers and polyurethanes.

This application is a divisional application of European Patent Application No. 92304651.0 which was published as EP 0 515203A.

There are a number of patents relating to co- and homo-polymers of lactic acid or the lactide of lactic acid. Generally these patents relate to the use of such polymers in biodegradable medical applications such as sutures, orthopaedic pins and plates and controlled release delivery systems for drugs. With the current concerns over the problems with land fill and the disposal of waste there has been an increasing awareness that biodegradable polymers might have application in a number of non-medical applications such as packaging.

Patent Co-operation Treaty Patent Application WO 90/01521 filed in the name of the Battelle Memorial Institute, published February 22, 1990 discloses that the properties of polylactide polymers may be improved by incorporating into the polymer either residual monomer or lactide oligomers. The patent application also discloses that the plasticized polymers may be further blended with other alloys such as a polymer of ethylene terephthalate or a polymer or copolymer of styrene, ethylene, vinyl chloride, vinyl acetate, alkyl methacrylates, alkyl acrylates and physical mixtures thereof (page 73, line 32 through page 74, line 4). However, the Battelle patent application does not suggest or disclose the polymer alloys of the present invention. Furthermore, none of the rather extensive prior art disclosed in the Battelle Patent Application suggests or discloses the polymer alloys of the present invention.

The present invention seeks to provide flexible polylactide polymer alloys. In a preferred embodiment of the present invention the alloys have a high degree of transparency or are translucent.

The present invention provides a polymer alloy comprising from 60 to 98 weight % of one or more polymers selected from: co- and homo-polymers of D, L, or DL, lactic acid and from 2 to 40 weight percent of one or more polymers selected from:
(i) co- and homo-polymers of one or more C₂₋₆ alkylene oxides;
(ii) co- and homo-polymers of a C₂₋₆ alkylene ether of a C₂₋₁₀ alkanol;
(iii) polymers comprising at least two C₂₋₃ alpha olefins;
(iv) terpolymers comprising from 95 to 99.5 weight % of at least two alpha C₂₋₃ olefins and from 5 to 0.5 weight % of a non-conjugated diolefin;
(v) synthetic co- and homo-polymers comprising one or more monomers selected from C₄₋₆ conjugated diolefins which are unsubstituted or substituted by a halogen atom;
(vi) copolymers comprising:
   (a) from 60 to 99 weight % of one or more monomers selected from C₄₋₆ conjugated diolefins;
   (b) from 1 to 40 weight % of one or more monomers selected from C₂₋₄ alkenyl nitriles; and
   (c) from 0 to 5 weight % of one or more monomers selected from:
      (1) C₃₋₆ ethylenically unsaturated carboxylic acids;
      (2) C₄₋₆ ethylenically unsaturated dicarboxylic acids and anhydrides of such acids;
      (3) amides of C₃₋₆ ethylenically unsaturated carboxylic acids; and
      (4) C₃₋₆ ethylenically unsaturated aldehydes;
(vii) copolymers of isoprene and isobutylene in a molar ratio from 1:99 to 3:97 which copolymers are unhalogenated or halogenated with up to 3 weight % of chlorine or bomine; and
(viii) a polyurethane thermoplastic elastomer.

The polymers (i) to (viii) listed above may be used alone or in combination with copolymers comprising from 80 to 20 weight % of one or more C₈₋₁₂ vinyl aromatic monomers which are unsubstituted or substituted by a C₁₋₄ alkyl radical, from 20 to 80 weight % of one or more C₄₋₆ conjugated diolefins and from 0 to 5 weight % of one or more functional monomers selected from:
(a) C₃₋₆ ethylenically unsaturated carboxylic acids;
(b) C₄₋₆ ethylenically dicarboxylic acids and anhydrides of such acids;
(c) amides of C₃₋₆ ethylenically unsaturated carboxylic acids; and
(d) C₃₋₆ ethylenically unsaturated aldehydes, which polymers are unhydrogenated or hydrogenated to not less than 80%.

As used in this specification the phrase homopolymers of D, L, or DL lactic acid is intended to include polymers prepared from lactic acid per se and polymers prepared from the various lactide optical isomers.

Lactides are dimers of lactic acid and may have a D, L, or a DL, (or meso) configuration. The polymers of the D or L configuration may have improved thermal and physical properties over the polymers prepared from the DL or a mixture of isomers. The polymers may have a molecular weight greater than about 60,000, preferably greater than 80,000. However, as noted in the Battelle patent application the polymers tend to be stiff and brittle. Therefore, it is desirable to find ways to improve the properties of the polymers.

Lactide polymers may be alloyed or blended with the above noted polymers. The ratio of lactide polymer to alloy polymer may range from 60:40 to about 98:2, preferably from 70:30 to 95:5 most preferably from 75:25 to 90:10

As used in this specification the term polymer when used in association with polymers other than those of lactic acid means a polymer having a degree of polymerization (DP) of at least 10.

The lactide polymer may be alloyed with a polymeric C₂₋₆, preferably C₂₋₄ alkylene oxide (also referred to as alkylene glycols) such as polyethylene oxide or polypropylene oxide. The polyalkylene oxide may have a molecular weight from about 8,000 up to about 100,000, preferably from about 8,000 to about 60,000, most preferably from about 10,000 to 40,000.

The lactide polymer may be alloyed with a polymeric C₂₋₆ alkylene ether of C₂₋₁₀ alkanol. The ether may have a molecular weight from about 50,000 to about 150,000, preferably from about 80,000 to 120,000. An alkylene ether is vinyl alcohol; although other higher homologues may be used.

The lactide polymer may be alloyed with a polymer comprising at least two C₂₋₃ alpha olefins. Suitable alpha olefins include C₂₋₃ and alpha olefins. Such polymers may have an ethylene weight ratio from about 75:25 to about 50:50.

The lactide polymer may be alloyed with a terpolymer comprising from 95 to 99.5 weight % of at least two alpha C₂₋₃ olefins and from 5 to 0.5 weight % of one or more C₅₋₁₂ non-conjugated diolefin. Preferably the terpolymer may comprise from 97 to 99.5 weight % of at least two alpha C₂₋₃ olefins and from 3 to 0.5 weight % of a non-conjugated diolefin. Suitable alpha olefins include ethylene and propylene. The weight ratio of ethylene to propylene may be from 75:25 to 50:50. Suitable C₅₋₁₂ non-conjugated diene monomers include 5-ethylidene-2-norbornene, 1,4-hexadiene, and dicyclopentadiene.

The lactide polymer may be alloyed with a synthetic homo- or co-polymer comprising one or more monomers selected from C₄₋₆ conjugated diolefins which are unsubstituted or substituted by a halogen atom. Some suitable C₄₋₆ conjugated diolefins have been listed above. Particularly suitable polymers include polybutadiene and polychloroperne. The polymer of the C₄₋₆ conjugated diolefin may be stereo specific, that is it may be in a trans- or cis-configuration or have a pendent vinyl group. The polymers may have a medium cis content of at least about 55%. Such polymers are commercially available under the trademrkas TAKTENE 550® available from Polysar Rubber Corporation and DIENE 55® available from the Firestone Company. The polymers may have a high cis content of more than 90, preferably more than about 95%. Such polymers are available from Polysar Rubber Corporation under the trademark TAKTENE®

The lactide polymer may be alloyed with one or more copolymers comprising:
(a) from 60 to 99 weight % of one or more monomers selected from C₄₋₆ conjugated diolefins;
(b) from 1 to 40 weight % of one or more monomers selected from C₂₋₄ alkenyl nitriles; and
(c) from 0 to 5 weight % of one or more monomers selected from :
   (1) C₃₋₆ ethylenically unsaturated carboxylic acids;
   (2) C₄₋₆ ethylenically unsaturated dicarboxylic acids and anhydrides of such acids;
   (3) amides of C₃₋₆ ethylenically unsaturated carboxylic acids; and
   (4) C₃₋₆ ethylenically unsaturated aldehydes;

Such polymers are typically called nitrile rubbers or caboxylated nitrile rubbers. Preferably the polymers comprise from 60 to 95% of one or more C₄₋₆ conjugated diolefins, form 40 to 5% of one or more C₁₋₄ alkenyl nitriles. The polymer need not contain a functional coup such as a carboxylic acid, an anhydride of a carboxylic acid, or an amide of a carboxylic acid. However, if one or more of such functional groups are present then they are preferably present in an amount from about 0.5 to 3 weight % and typically the amount of conjugated diolefin would decrease correspondingly. Some functional monomers have been discussed above. Suitable C₄₋₆ conjugated diolefins include those discussed above and chloroprene. Suitable C₂₋₄ alkenyl nitriles include acrylonitrile and methacrylonitrile.

The lactide polymer may be alloyed with copolymers of isoprene and isobutylene in a molar ratio from 1:99 to 3:97. Such polymers may be unhalogenated or halogenated with up to about 3 weight % of chlorine or bromine. Such polymers are commercially available and are commonly referred to as butyl rubbers.

The lactide polymer may be alloyed with a polyurethane thermoplastic elastomer. The polyurethane may be a polyether urethane or a polyester urethane. A preferred polyurethane or a polyester urethane. A preferred polyurethane is a polyester urethane most preferably based on adipic acid or caprolactone. The polyester urethane may have a molecular weight from about 10,000 to about 150,000.

The polymers detailed above may additionally be alloyed with a copolymer of a vinyl aromatic monomer and a conjugated diene and optionally one or more functional monomers. Such a polymer may be a random polymer, a linear block, or a radial block polymer. The vinyl aromatic-conjugated diene polymer may comprise from 80 to 20 weight % of one or more C₈₋₁₂ vinyl aromatic monomers which are unsubstituted or substituted by a C₁₋₄ alkyl radical and from 20 to 80 weight % of one or more C₄₋₆ conjugated diolefins and from 0 to 5 weight % of one or more functional monomers selected from :
(a) C₃₋₆ ethylenically unsaturated carboxylic acids;
(b) C₄₋₆ ethylenically unsaturated dicarboxylic acids and anhydrides of such acids;
(c) amides of C₃₋₆ ethylenically unsaturated carboxylic acids; and
(d) C₃₋₆ ethylenically unsaturated aldehydes which polymers are unhydrogenated or hydrogenated to not less than 80%.

Preferably the polymer of vinyl aromatic monomer and conjugated diolefin comprises: from 60 to 40 weight % of one or more C₈₋₁₂ vinyl aromatic monomers which are unsubstituted or substituted by a C₁₋₄ alkyl radical and from 40 to 60 weight % of one or more C₄₋₆ conjugated diolefins and from 0 to 3 weight % of one or more functional monomers selected from :
(a) C₃₋₆ ethylenically unsaturated carboxylic acids;
(b) C₄₋₆ ethylenically unsaturated dicarboxylic acids and anhydrides of such acids;
(c) amides of C₃₋₆ ethylenically unsaturated carboxylic acids; and
(d) C₃₋₆ ethylenically unsaturated aldehydes.

The polymer of vinyl aromatic monomer and conjugated diolefin need not comprise any functional monomer. That is it may comprise only vinyl aromatic monomer and conjugated diolefin.

The vinyl aromatic and conjugated diene copolymer may be unhydrogenated or it may be hydrogenated to at least 80, preferably 90, most preferably greater than 95 weight %. An hydrogenated vinyl aromatic and conjugated diene polymer may be a linear or radial, preferably linear, block copolymer comprising from 40 to 60 weight % of vinyl aromatic monomer, from 60 to 40 weight % of conjugated diolefin and from 0.5 to 3 weight % of an anhydride of a C₄₋₆ ethylenically unsaturated carboxylic acid which polymer has been hydrogenated to at least 90 weight %.

Suitable vinyl aromatic monomers include styrene, alpha methyl styrene, and tertiary butyl styrene. A particularly suitable vinyl aromatic monomer is styrene. Suitable conjugated diolefin monomers include 1,4 butadiene, and isoprene.

The alloys of the present invention may be prepared by conventional processing techniques. That is the polymeric components may be blended in a tumble blender at a suitable weight ratio. The dry blend may be extruded using conventional techniques known to those skilled in the art. The dwell time, temperature and shear rate in the exruder are selected so that the alloy and particularly the lactide polymer will not undergo significant degradation during the extrusion process. Generally the temperatures in the extruder should not exceed 20, preferably less than 10, degrees above the melting temperature of the lactide polymer. For example, in a single screw extruder having a D to L ratio of 1:24 the operating temperature should not exceed about 200 degrees Centigrade and the operating rate should be from about 50 to 150, preferably from about 75 to 120 RPMs.

Of course, if a suitable common solvent can be found the alloy could be prepared by solution blending. However, the requirement to use and remove solvents which are typically organic is less desirable due to environmental regulation.

The alloys may be prepared by reactive blending. That is the lactide may be used in monomer or partially or fully polymerized form. The resulting mass is then reacted preferably in the presence of a catalyst at atmospheric pressure at temperatures up to about 10 degrees above the melting to polylactide homopolymer.

A catalyst may comprise metallic ester(s) of C₂₋₁₀, preferably C₆₋₁₀ carboxylic acids. Suitable metals include tin and zinc.

The catalyst concentration may be in the range from 0.01 to about 1, preferably from 0.01 to 0.3 weight % of the reactive mixture. The reaction time will vary depending on the type of reactor, mixing conditions and heat transferability of the reactor. Typically the residence times for the reaction/mixing will range from about 1 to 60 minutes.

The resulting base alloy may then be further compounded with suitable processing aids and other additives e.g. antioxidants, flame retardants and fillers. Typically these additives will not form more than about 50, preferably less than 25, most preferably less than about 15 weight % of the polymer alloy.

The resulting alloy may be converted into useful products using known techniques such as blow, injection and compression molding, and extrusion, and blow extrusion for thin films and relatively thin sheets. Extrusion techniques followed by thermoforming may be used to produce various products. The alloy my be injection or compression molded.

The alloy may be formed into thin sheets or films useful in packaging applications such as bags and blister packaging.

As noted in the specification the alloys may have a high degree of translucence or may even be transparent while at the same time having good flexibility.

The present invention will now be illustrated by the following non-limiting examples in which unless otherwise specified parts by weight and % is weight %. In the table the ratio of lactide polymer (BP) to alloy polymer (X) is a weight ratio.

### Example 1

A sample of polylactide polymer (L polylactide) was charged to a Brabender mixer under a 10 kg ram weight. The bowl of the Brabender was heated to 180 degrees C. The mixing continued until a constant torque. Then a sample of alloy polyer was added to the Brabender and the torque initially fell then mixing continued until a constant torque was obtained. The sample was allowed to cool to about 20 degrees C and the sample was then removed from the Brabender. The resulting sample was then compression molded as a thin sheet. The exudence of the alloy (e.g. the tendency of the soft phase to migrate to the surface of the alloy), transparency, flexibility and crazing of the resulting sheet were then subjectively measured. The results and the scale for measuring results are set forth in Table 1.

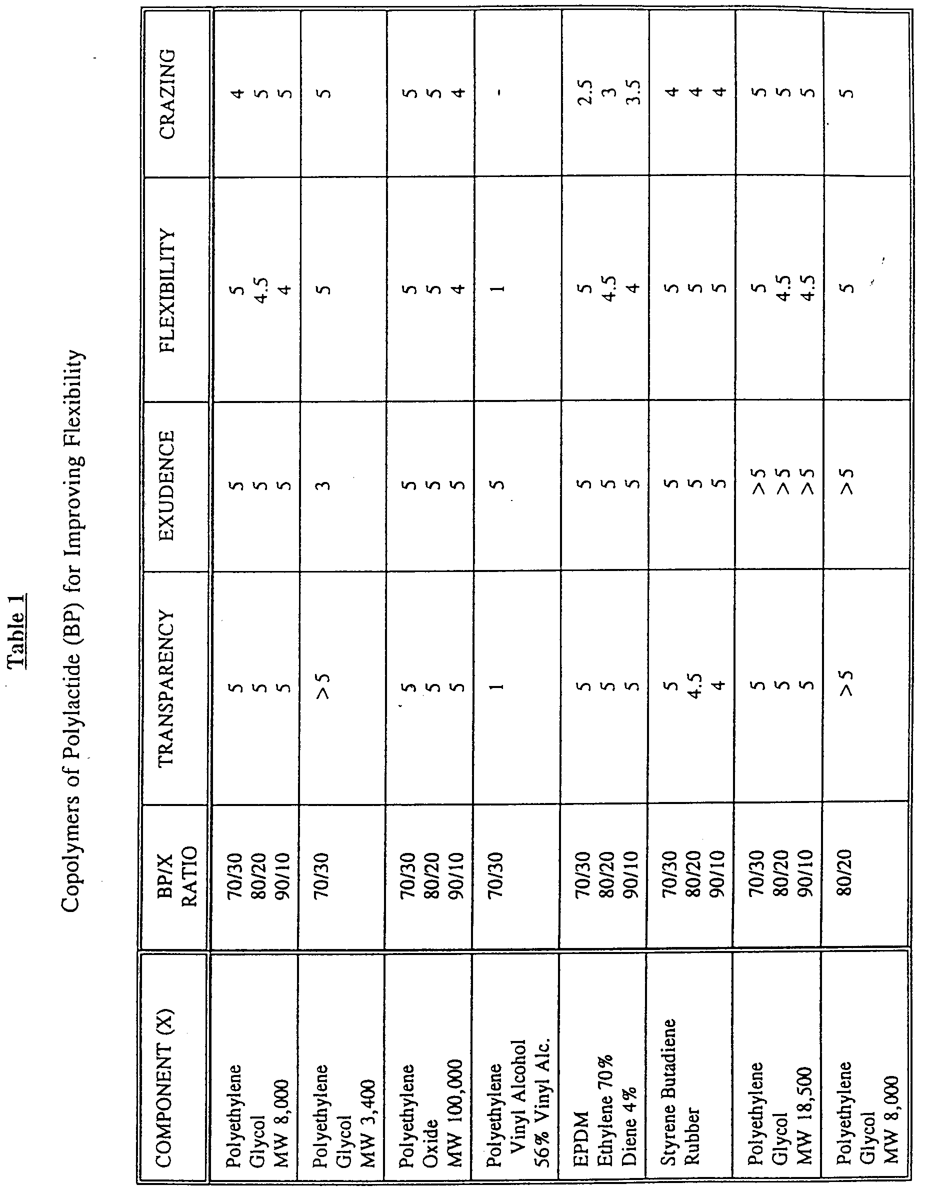

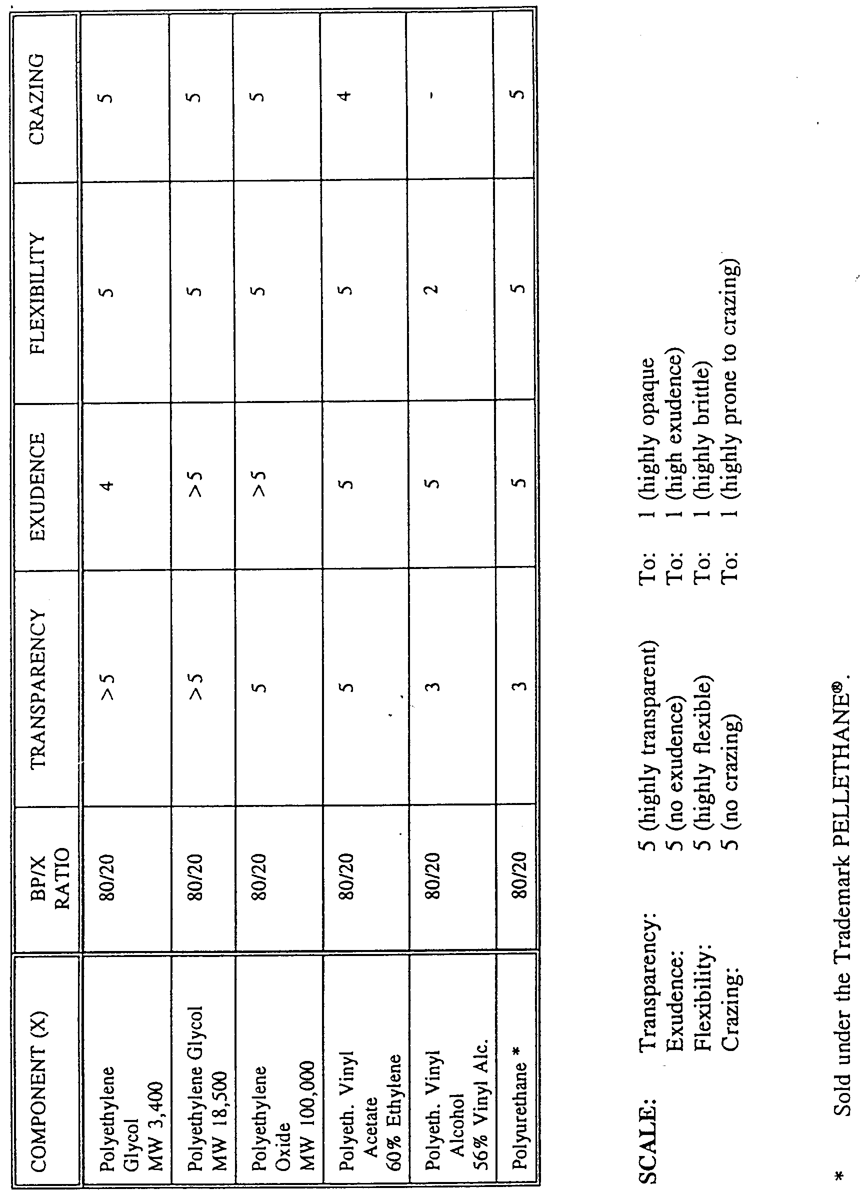

The results show that the alloys of the present invention have good flexibility and may be compounded to obtain high translucence or even transparent sheets or films.

In the present application's disclosure of the present invention, any numerical value includes the precise value and any value "about" or "essentially" or "substantially" the same as the precise value. The wording of the appended claims and abstract is incorporated into the present description.

## Claims

1. A polymer alloy comprising from 60 to 98 weight % of one or more polymers selected from: co- and homo-polymers of D, L, or DL, lactic acid and; from 2 to 40 weight percent of one or more polymers selected from:
(i) co- and homo-polymers of one or more C₂₋₆ alkylene oxides;
(ii) co- and homo-polymers of a C₂₋₆ alkylene ether of a C₂₋₁₀ alkanol;
(iii) polymers comprising at least two C₂₋₃ alpha olefins;
(iv) terpolymers comprising from 95 to 99.5 weight % of at least two alpha C₂₋₃ olefins and from 5 to 0.5 weight % of a non-conjugated diolefin;
(v) synthetic co- and homo-polymers comprising one or more monomers selected from C₄₋₆ conjugated diolefins which are unsubstituted or substituted by a halogen atom;
(vi) copolymers comprising:
(a) from 60 to 99 weight % of one or more monomers selected from C₄₋₆ conjugated diolefins;
(b) from 1 to 40 weight % of one or more monomers selected from C₂₋₄ alkenyl nitriles; and
(c) from 0 to 5 weight % of one or more monomers selected from :
(1) C₃₋₆ ethylenically unsaturated carboxylic acids;
(2) C₄₋₆ ethylenically unsaturated dicarboxylic acids and anhydrides of such acids;
(3) amides of C₃₋₆ ethylenically unsaturated carboxylic acids; and
(4) C₃₋₆ ethylenically unsaturated aldehydes;
(vii) copolymers of isoprene and isobutylene in a molar ratio from 1:99 to 3:97 which copolymers are unhalogenated or halogenated with up to 3 weight % of chlorine or bromine; and
(viii) a polyurethane thermoplastic elastomer.

2. The polymer alloy according to Claim 1, wherein the polymer of lactic acid has a molecular weight of at least 60,000.

3. The polymer alloy according to Claim 2, wherein the polymer of lactic acid is present in an amount from 70 to 95 weight %.

4. The polymer alloy according to any one of Claims 1 to 3 wherein the polymer of a C₂₋₆ alkylene oxide is selected from polyethylene oxide and polypropylene oxide.

5. The polymer alloy according to any one of Claims 1 to 4 wherein Claim 4, the poly alkylene oxide has a molecular weight from 8,000 to 100,000, preferably 8,000 to 60,000.

6. The polymer alloy according to any one of Claims 1 to 5 wherein the C₂₋₆ alkylene ether of a C₂₋₁₀ alkanol is vinyl alcohol.

7. The polymer alloy according to any one of Claims 1 to 6 wherein the conjugated diolefin is selected from 1,4 butadiene and isoprene.

8. The polymer alloy according to any one of Claims 1 to 7 wherein the polymer of vinyl aromatic monomer and conjugated diolefin polymer comprises only vinyl aromatic monomer and conjugated diolefin.

9. The polymer alloy according to any one of Claims 1 to 8, wherein the polymer comprising at least two C₂₋₃ alpha olefins is a copolymer of ethylene and propylene in a weight ratio from 50:50 to 75:25.

10. The polymer alloy according to any one of Claims 1 to 9, wherein the terpolymers comprise from 97 to 99.5 weight % of ethylene and propylene in a weight ratio from 50:50 to 75:25 and from 3 to 0.5 weight % of a non-conjugated diolefin monomer.

11. The polymer alloy according to any one of Claims 1 to 10 wherein the non-conjugated diolefin monomer is selected from 5-ethylidene-2-norbornene, 1,4-hexadiene and dicyclopentadiene.

12. The polymer alloy according to any one of Claims 1 to 11 wherein the co- and homo-polymers of C₄₋₆ conjugated diolefins are co-and homo-polymers of one or more monomers selected from butadiene, isoprene and chloroprene.

13. The polymer alloy according to any one of Claims 1 to 12 wherein the copolymer of a conjugated diolefin and an alkenyl nitrile comprises:
(a) from 60 to 95 weight % of one or more monomers selected from butadiene, isoprene and chloroprene;
(b) from 40 to 5 weight % of one or more monomers selected from acrylonitrile and methacrylonitrile.

14. The polymer alloy according to any one of Claims 1 to 13 wherein the copolymer of a conjugated diolefin and an alkenyl nitrile comprises:
(a) from 57 to 94.5 weight % of one or more monomers selected from butadiene, isoprene and chloroprene;
(b) from 40 to 5 weight % of one or more monomers selected from acrylonitrile and methacrylonitrile; and
(c) from 0.5 to 3 weight % of one or more functional monomers selected from:
(i) C₃₋₆ ethylenically unsaturated carboxylic acids,
(ii) C₄₋₆ ethylenically unsaturated dicarboxylic acids and anhydrides of such acids;
(iii) amides of C₃₋₆ ethylenically unsaturated carboxylic acids; and
(iv) C₃₋₆ ethylenically unsaturated aldehydes.

15. The polymer alloy according to any one of Claims 1 to 14 wherein the copolymer comprising isoprene and isobutylene is unhalogenated.

16. The polymer alloy according to any one of Claims 1 to 15 wherein the urethane thermoplastic elastomer is a polyester urethane having a molecular weight from 10,000 to 150,000 based on adipic acid or caprolactone.

17. The polymer alloy of any one of Claims 1 to 16, characterised by being translucent or transparent.

18. The polymer alloy of any one of Claims 1 to 17, characterised by being flexible.

19. A blow, injection or compression molded, extruded or thermoformed article, formed from the polymer alloy of any one of Claims 1 to 18.

20. The article of Claim 19 being a sheet, film, bag, or blister packaging.
